# EUROPEAN PATENT APPLICATION

(11) **EP 4 516 494 A1**
(43) Date of publication of application: **05.03.2025**
(21) Application number: 23194289.7
(22) Date of filing: 30.08.2023
(51) Int. Cl.: B29C 70/54, B05D 1/26, B24B 19/14, B29C 64/106, B29C 73/02, B29C 73/16, B29D 99/00, B33Y 10/00, B33Y 80/00, F03D 1/06, B05D 1/42, B29L 31/08

(54) **METHOD FOR MANUFACTURING A WIND TURBINE BLADE OR WIND TURBINE BLADE SECTION AND GRINDING APPARATUS**

(71) Applicant: Siemens Gamesa Renewable Energy A/S, 7330 Brande (DK)
(72) Inventor: Andersen, Thomas Lund, 9530 Støvring (DK); Dircks, Stefan, 24976 Handewitt (DE); Hedegaard, Ulrich, 9330 Droninninglund (DK); Rokohl, Simon Groenlund, 9000 Aalborg (DK)
(74) Representative: SGRE-Association

(57) **Abstract**

A method for manufacturing a wind turbine blade, comprising the steps
a) Manufacturing a raw wind turbine blade (1) by lamination of one or multiple layers of fiber material, wherein the raw wind turbine blade (1) comprises at least one groove (2) running at least with a directional component along a spanwise direction (S);
b) Filling the at least one groove (2) with a hardenable filler material (3) so that a filled groove (21) is provided;
c) Providing a grinding apparatus (4)
- comprising a tool head (41) with at least one grinding means (411, 415),
- wherein the tool head (41) is moveable at least along the
spanwise direction (S),
- and wherein a shape of the tool head (41) is adaptable at
least with respect to a plane running perpendicular to the
spanwise direction (S);

d) Placing the grinding means (411,415) of the tool head (41) on a section of the filled groove (21);
e) Adapting the shape of the tool head (41) so that it corresponds with a shape of a cross-section of an airfoil geometry of the wind turbine blade at a given spanwise position;
f) Moving the tool head (41) in the spanwise direction (S), thereby continuously grinding of filler material (3) with the grinding means (411,415).

The method allows for an automation of currently manually executed grinding steps and thus both increases production speed and lowers costs for wind turbine blades.

## Description

The present invention relates to a method for manufacturing a wind turbine blade or wind turbine blade section and to a grinding apparatus for grinding a grinding area of a raw wind turbine blade or raw wind turbine blade section, the grinding area having an extension along a spanwise direction of the raw wind turbine blade or raw wind turbine blade section and a convex or concave curved cross-section.

Wind turbine blades, especially for offshore use, with the evolvement of technology continuously increase in size. Regarding the main dimensions current blades can reach a root diameter of approximately 4m, a blade length of well over 100m while typical chord lengths can reach up to 7m or even more. Although the dimensions are literally tremendous the production of wind turbine blades still includes many steps that require manual labor. A major portion of the manual labor is represented by grinding work at the outer surface of the blade.

Typically, wind turbine blades are manufactured by lamination of multiple layers of fiber material in a mold having the shape of a negative impression of the outer blade geometry.

One approach including a transversal fiber material layup is the IntegralBlade^{®} technology that is described in detail in EP 1 310 351 A1 which plays an important role as it avoids glue joints at the leading edge and/or trailing edge of the blade that are both disadvantageous from an aerodynamic perspective and a mechanical stiffness perspective. Rather, the entire blade is produced as a single piece with continuous fiber plies at the leading and the trailing edge.

A typical fiber material layup in a mold includes one or multiple air extraction means that are adapted to extract excess air from the mold before and/or during resin infusion of the fiber material layup. The air extraction means do not become part of the final blade structure but are an auxiliary production tool. Typical air extraction means include semipermeable membranes, i.e. membranes that allow gases, in particular air, to pass and block the passage of liquids, in particular resin. The permeable membranes are connected to a vacuum source located externally of the mold so that excess air from the mold can be extracted therefrom. Sometimes such air extraction means are also referred to as "filters".

The air extraction means are typically placed in the mold with an extension along a spanwise or longitudinal direction so that the raw wind turbine blade after removing it from the mold has grooves at its outer surface running along the spanwise or longitudinal direction at the positions where the air extraction means have been placed in the mold.

These grooves have to be filled with a hardenable filler material to restore the intended airfoil geometry of the final wind turbine blade. After application and hardening of the filler material excess filler material, e.g. residual filler material protruding beyond the intended airfoil geometry and/or laterally outwardly from the groove, has to be ground off. This is currently done by manual labor which, depending on the concrete dimensions of the blade, may take over 60 man-hours which is unproductive and expensive.

But manual grinding steps are not only disadvantageous from a productivity perspective. As the grinding is mainly done in an overhead position the execution of these manual labor steps means an enormous physical strain for the workers. Additionally, the particles generated by grinding mean a health risk. As most jurisdictions impose various limitations with regards to labor safety (e.g. ergonomics specifications, lifting weights for overhead work, air quality) on employers the retention of the manual labor steps implies a barrier for both the dimensions of the blades that can be produced and for any potential productivity gains.

Additionally, as said grooves are typically located in either convex or concave curved cross-sections of the blade, it is not easy for workers doing the manual grinding to maintain the intended airfoil geometry of the blade without compromising it. However, a near target shape of the airfoil geometry is of utmost importance as deviations therefrom can lead to performance losses of the blade, e.g. in the form of increased drag and/or reduced lift.

Therefore it is one object of the present invention to provide a method for manufacturing a wind turbine blade or wind turbine blade section that eliminates above technical disadvantages and allows for a further automation of the production and thus both increases production speed and lowers costs.

It is a further object of the present invention to provide a grinding apparatus for grinding a grinding area of a raw wind turbine blade or raw wind turbine blade section that allows for an automation of grinding steps that are currently executed as manual labor steps.

Accordingly, a method for manufacturing a wind turbine blade or wind turbine blade section is proposed.

The method comprises the following steps:
a) Manufacturing a raw wind turbine blade or raw wind turbine blade section by lamination of one or multiple layers of fiber material, wherein the raw wind turbine blade or raw wind turbine blade section comprises at least one groove running at least with a directional component along a spanwise direction;
b) Filling the at least one groove with a hardenable filler material that is subsequently hardened so that at least one filled groove is provided;
c) Providing a grinding apparatus
   - comprising a tool head with at least one grinding means,
   - wherein the tool head is moveable at least along the spanwise direction,
   - and wherein a shape of the tool head is adaptable at least with respect to a plane running perpendicular to the
   spanwise direction;
d) Placing the grinding means of the tool head on a section of the filled groove;
e) Adapting the shape of the tool head so that it corresponds with a shape of a cross-section of an airfoil geometry of the wind turbine blade or wind turbine blade section at a given spanwise position;
f) Moving the tool head in the spanwise direction, thereby continuously grinding of the filler material with the grinding means.

The raw wind turbine blade or raw wind turbine blade section might also be referred to as "green wind turbine blade" or "green wind turbine blade section". "Raw" herein in particular having the meaning of unfinished, in particular without a final surface coating applied to an outer surface.

The at least one groove might in particular have a depth between 1 mm and 10 mm, in particular between 2 mm and 5 mm. The at least one groove might be the result of previous process steps, in particular it might represent a negative impression of a volume in that air extraction means or "filters" have been placed in a mold for lamination of the raw wind turbine blade or raw wind turbine blade section.

The hardenable filler material might comprise a suitable plastic material and can be provided in a paste-like state with a relatively high viscosity so that it sticks to the groove and does not flow away under the influence of gravity.

The hardenable filler material might in particular comprise a 2 component system, in particular a 2 component epoxy system.

The filler material applied to the groove in step b) might slightly protrude above a cross-section of the airfoil geometry of the final wind turbine blade or wind turbine blade section which is ground off in step f) to bring the blade back to its target airfoil geometry.

The adaption of the shape of the tool head ensures that filled grooves located in convex and/or concave cross-sections of the raw wind turbine blade or raw wind turbine blade section can be grinded in the best possible way, i.e. without compromising the airfoil shape and without grinding the structure of the raw wind turbine blade or raw wind turbine blade section in regions laterally neighboring the filled groove which could harm the laminate structure. In other words, adaption of the shape of the tool head to a shape of a cross-section of an airfoil geometry of the wind turbine blade or wind turbine blade section at a given spanwise position ensures that the grinding only happens where it is supposed to happen, namely limited to the filled groove, and that the shape of the airfoil geometry is not compromised by the grinding as the tool head forms a negative shape of the airfoil geometry of the blade at a given spanwise position in a cross-section where the filled groove is located.

In embodiments the tool head might comprise a support for the grinding means. The support can in particular be deformable so that its shape is actively adjustable to adapt the shape of a contact surface between tool head and a blade surface. The support may comprise one or multiple moveable elements, for example rollers, which are adapted to transfer forces to the grinding means as the grinding means is under grinding movement.

The grinding means can be rotatable around the spanwise direction or chordwise direction of the raw wind turbine blade or raw wind turbine blade section, wherein in particular the grinding means comprises at least one belt sander or rotatable grinding head. A grinding speed, e.g. rotational speed, of the grinding means can be controlled. Additionally or alternatively, a feed speed with that the tool head is moved along the spanwise direction in step f) can be controlled as well.

Advantageously, the method according to the invention allows to grind the filled grooves fully automatic without the need for manual labor. This allows for significant productivity gains in the production of wind turbine blades as the grinding apparatus used in the method according to the invention can perform the grinding quicker and with less downtime and/or without breaks. Additionally, the method is also beneficial under a Health Safety Environment (HSE) perspective as overhead works in dust loaded environments are avoided. An operator controlling the equipment used in the method according to the invention might do this remote from the grinding site in a clean environment. Further, the method according to the invention allows for a more consistent grinding quality as human errors are eliminated through the automation of the grinding process.

According to a further embodiment, the shape of the tool head of the grinding apparatus is continuously adapted in step f) as the tool head is moved along the spanwise direction to correspond with a local shape of a cross-section of the airfoil geometry of the wind turbine blade or wind turbine blade section.

According to a further embodiment, the tool head of the grinding apparatus is moveable in a height direction with respect to an intended state of use of the grinding apparatus and wherein step f) comprises continuously adjusting a height position of the tool head as the tool head is moved along the spanwise direction to correspond with a local height position of the filled groove. Depending on the type of blade or blade section, typical heights at that the filled grooves are located during the grinding process may reach from 3 m to 6 m.

According to yet a further embodiment, the raw wind turbine blade or raw wind turbine blade section is fixed by a fixture in a predefined height over the ground so that the spanwise direction runs essentially parallel to the ground, wherein in particular a suction side and/or pressure side of the raw wind turbine blade or raw wind turbine blade section are located sidewards.

Such a fixture might in particular be fixed to a root section of the raw wind turbine blade or blade section. In particular the fixture can allow for a rotational movement of the raw wind turbine blade or blade section along the spanwise direction.

According to a further embodiment, steps d) to f) are executed at a pressure side and/or a suction side of the raw wind turbine blade or raw wind turbine blade section, i.e. in particular from the sides of the raw wind turbine blade or raw wind turbine blade section. Alternatively or additionally, the grinding apparatus can be located sideways adjacent to the raw wind turbine blade or raw wind turbine blade section, in particular during execution of the method steps d) to f).

The raw wind turbine blade or blade section might comprise more than one groove running at least with a directional component along a spanwise direction, for example at least one groove at a suction side and at least one groove at the pressure side and/or multiple grooves at the suction side and/or pressure side. Grinding of grooves at the pressure side and the suction side may be done serially or simultaneously, wherein separate grinding apparatuses can be located sideways adjacent to the raw wind turbine blade or raw wind turbine blade section at the pressure side and the suction side. Multiple grooves at the pressure side or the suction side might be grinded serially or simultaneously, e.g. by using separate grinding apparatuses which are spaced along the spanwise direction of the blade.

According to yet a further embodiment, the tool head of the grinding apparatus is rotatable at least along one axis, wherein the at least one axis in particular runs parallel to the spanwise direction of the raw wind turbine blade or raw wind turbine blade section. It is in particular possible that step f) includes continuously adapting a rotational position of the tool head as the tool head is moved along the spanwise direction to ensure the grinding means of the tool head contacts the filled groove at a given spanwise position at a predefined grinding angle.

The tool head might have other rotational degrees of freedom of movement as well, e.g. other possible rotational axes are axes running perpendicularly to the spanwise direction, for example an axis running parallel to the chordwise direction and/or an axis being both oriented perpendicularly to the spanwise and the chordwise direction. By providing the tool head with rotational degrees of freedom of movement the tool head can even better adapt to a shape of a cross-section of an airfoil geometry of the wind turbine blade or wind turbine blade section at a given spanwise position. Additionally, adaption of the grinding angle allows to make use of the grinding means in the most effective way, e.g. to ensure homogeneous wear.

According to a further embodiment, the tool head of the grinding apparatus comprises multiple actuators arranged spaced apart along a circumferential direction of the raw wind turbine blade or raw wind turbine blade section, wherein the actuators are each adapted to locally apply a force on the grinding means, and wherein the actuators are used in step d) and/or f) to adapt the shape of the tool head.

For example, the actuators can comprise pneumatic or hydraulic pressure cylinders. Alternatively, the actuators may comprise fluid tight expansion pockets that can be individually inflated by a pressurized fluid. Yet alternatively, the actuators may comprise electrical actuators, such as stepper motors. It is in particular possible that the actuators are mechanically connected to the support for the grinding means, the shape of which is actively adjusted by the actuators to adapt the shape of a contact surface between tool head and a blade surface.

In embodiments the grinding apparatus can comprise at least one processing means adapted to individually control at least the actuators and/or the height position of the tool head.

The processing means may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

Alternatively or additionally, the processing means can be adapted to also control the grinding speed of the grinding means and/or the feed speed of the tool head.

According to another embodiment, the grinding apparatus, in particular the tool head of the grinding apparatus, comprises at least one optical projection means, in particular a dot and/or line projection means, adapted to project a dot or line of light onto an outer surface of the raw wind turbine blade or raw wind turbine blade section in at least one region laterally neighboring the filled groove. Additionally, the grinding apparatus, in particular the tool head of the grinding apparatus, comprises at least one optical sensor adapted to detect said projected dot or line of light on the surface of the raw wind turbine blade or raw wind turbine blade section, wherein said optical sensor is operably coupled to the processing means.

In step d) and/or f) data from the optical sensor may be processed by the processing means to adapt the shape of the tool head by individually controlling the multiple actuators to ensure that substantially only the filled groove is grinded and/or to adjust a height position of the tool head.

In embodiments, an optical projection means can in particular include a laser and/or other types of focused light sources.

The projected dot or line of light on the surface of the raw wind turbine blade or raw wind turbine blade section gives an indication of the area that is to be grinded with the grinding tool and allows the actuators to be retracted to reduce pressure on the grinding means in regions located laterally outwardly therefrom. This significantly helps to ensure that the laminate structure of the raw wind turbine blade or raw wind turbine blade section outside of the filled groove is not damaged by grinding.

According to yet another embodiment, the grinding apparatus, in particular the tool head of the grinding apparatus, comprises at least one camera and/or at least one distance sensor and/or at least one gloss meter and/or at least one 3D-scanner. The at least one camera and/or at least one distance sensor and/or at least one gloss meter and/or at least one 3D-scanner can be in particular operably coupled to the processing means, wherein in step d) and/or f) data from the at least one camera and/or at least one distance sensor and/or at least one gloss meter and/or at least one 3D-scanner can be processed by the processing means to adapt the shape of the tool head by individually controlling the multiple actuators to ensure that substantially only the filled groove is grinded and/or to adjust a height position of the tool head.

Alternatively, the at least one camera and/or at least one distance sensor and/or at least one gloss meter and/or at least one 3D-scanner can be used to continuously monitor a grinding quality in step f) wherein it is in particular possible that based on data from the at least one camera and/or at least one distance sensor and/or at least one gloss meter and/or at least one 3D-scanner grinding parameters like the grinding speed of the grinding tool and/or the feed speed of the tool head in the spanwise direction are controlled to ensure a target grinding quality.

The processing means might comprise software that comprises self-learning algorithms and/or components of artificial intelligence (AI) that learn based on control interventions in the past.

According to a further embodiment, the grinding apparatus comprises a processing means operably coupled with at least one data source, wherein the data source comprises data describing a three-dimensional shape of an outer surface of the wind turbine blade or wind turbine blade section, wherein in step f) the tool head is moved along the spanwise direction under continuous adaption of the height position of the tool head and/or under continuous adaption of the shape of the tool head based on said data.

The data describing a three-dimensional shape of an outer surface of the wind turbine blade or wind turbine blade section might in particular be stored in the data source as a typical 3D-CAD file, e.g. a Step-file or similar file formats that the skilled person deems appropriate.

In other embodiments, certain process parameters, e.g. the height position of the tool head, the grinding speed of the grinding means, the feed speed of the tool head and/or the shape of the tool head might be controlled by an operator of the grinding apparatus by a human-machine interface provided by the grinding apparatus.

According to a second aspect, a grinding apparatus for grinding a grinding area of a raw wind turbine blade or raw wind turbine blade section, in particular for use in a method according to the first aspect of the invention, is proposed. The grinding area having an extension along a spanwise direction of the raw wind turbine blade or raw wind turbine blade section and a convex or concave curved cross-section.

The grinding apparatus comprises:
- a tool head with at least one grinding means,
- wherein the tool head is moveable at least along the spanwise direction of the raw wind turbine blade or raw wind turbine blade section,
- and wherein a shape of the tool head is adaptable at least with respect to a plane running perpendicular to a spanwise direction of the raw wind turbine blade or raw wind turbine blade section.

According to a further embodiment, the tool head is mounted to an apparatus base that is moveable on the ground, wherein in particular the apparatus base comprises a drive system and wheels that allows movement of the apparatus base in the spanwise direction of the raw wind turbine blade or raw wind turbine blade section. The drive system allows the apparatus base to be moved with a preset and/or controlled feed speed along the spanwise direction of the blade or blade section.

The tool head may be fixed to the apparatus base so that the tool head can in particular be moved together with the apparatus base. The apparatus base may be either mounted on rails on the ground or the wheels may be placed directly on the ground. In the latter case the drive system may include a guiding system, e.g. an optical guiding system with guide markings on the ground, to direct the movement of the apparatus base along an intended path along the spanwise direction of the blade or blade section.

Alternatively, the tool head may be mounted at a crane or gantry system above the raw wind turbine blade or raw wind turbine blade section in an intended state of use of the grinding apparatus, wherein the crane or gantry system allows movement of the tool head in the spanwise direction of the raw wind turbine blade or raw wind turbine blade section.

According to another embodiment, the grinding means is rotatable around the spanwise direction or chordwise direction of the raw wind turbine blade or raw wind turbine blade section in an intended state of use of the grinding apparatus, wherein in particular the grinding means comprises at least one belt sander or rotatable grinding head.

An extension of the grinding means along the circumferential direction of the blade or blade section in an intended state of use of the grinding apparatus may reach from 40 cm to 150 cm, in particular from 60 cm to 120 cm.

Lastly, the tool head may comprise at least one suction nozzle connectable to a vacuum source for dust extraction from the grinding means.

The embodiments and features described with reference to the method of the present invention apply mutatis mutandis to the apparatus of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic side view of a raw wind turbine blade with filled grooves running at least with a directional component along a spanwise direction;
Fig. 2a shows cross-section A-A of Fig. 1 of a raw wind turbine blade with unfilled grooves;
Fig. 2b shows cross-section A-A of Fig. 1 of a raw wind turbine blade with filled grooves before grinding;
Fig. 2c shows cross-section A-A of Fig. 1 of a raw wind turbine blade with filled grooves after grinding;
Fig. 3 shows a schematic side view of the raw wind turbine blade of Fig. 1 during execution of the method according to the invention with a grinding apparatus located sideways adjacent to the raw wind turbine blade;
Fig. 4 shows a schematic view of a grinding apparatus according to the invention;
Fig. 5 shows the tool head of the grinding apparatus as Detail A according to Fig. 4;
Fig. 6 shows the tool head of the grinding apparatus as cross-section B-B according to Fig. 5, the tool head in a concave shape;
Fig. 7 shows the tool head of the grinding apparatus as cross-section B-B according to Fig. 5, the tool head in a convex shape;
Fig. 8 shows a bottom view of the tool head of Fig. 6 and Fig. 7;
Fig. 9 shows a different tool head of the grinding apparatus as cross-section B-B according to Fig. 5, the tool head in a flat shape and
Fig. 10 shows a flow chart of an embodiment of the method according to the invention.

In the Figures, like reference numerals designate like or functionally equivalent elements, unless otherwise indicated.

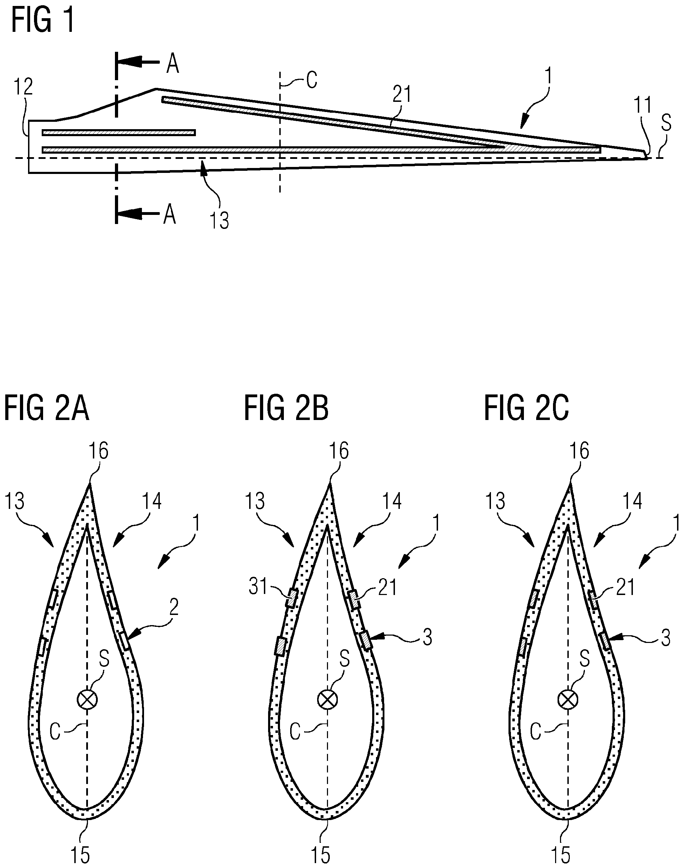

**Fig. 1** shows a schematic side view of a raw wind turbine blade 1 with three filled grooves 21 running at least with a directional component along the spanwise direction S. The raw wind turbine blade 1 comprises a blade tip 11 and a blade root 12, wherein the blade 1 might be fixed by a fixture in a predefined height over the ground G at the root 12 during execution of the method according to the invention. The blade structure is hollow with at least one cavity on the inside and comprises a shell comprising multiple layers of fiber material and core material. The blade 1 comprises an airfoil geometry with a pressure side 13 and a suction side 14, wherein a section of the shell associated with the pressure side 13 and a section of the shell associated with the suction side 14 meet at a leading edge 15 and a trailing edge 16.

In **Fig. 2a** a cross-section in the plane A-A of a raw wind turbine blade 1 is shown, wherein the grooves 2 are still unfilled which corresponds to a condition of the raw blade 1 as it is removed from a mold. The grooves 2 correspond to positions at which air extraction material or "filters" have been placed in the mold. As the grooves 2 form deviations from an ideal airfoil geometry they are subsequently filled with a hardenable filler material having a past-like consistency, which is shown in **Fig. 2b****.**

The hardenable filler material 3 is applied to the grooves 2 so that the hollow space is completely filled which creates filled grooves 21. A surface of the filler material 3 might be smoothened with a spatula after filling the grooves 2 so that as little filler material 3 as possible protrudes beyond the intended airfoil geometry and/or laterally outwardly from the grooves 2. However, this cannot completely be avoided so that the filled grooves 21 still have a protruding portion 31 of filler material 3 that subsequently has to be grinded off.

**Fig. 2c** shows a condition of the blade 1 after grinding, wherein the protruding portion 31 of filler material 3 has been removed from the filled grooves 21 so that the blade 1 has an ideal airfoil geometry around its full circumference.

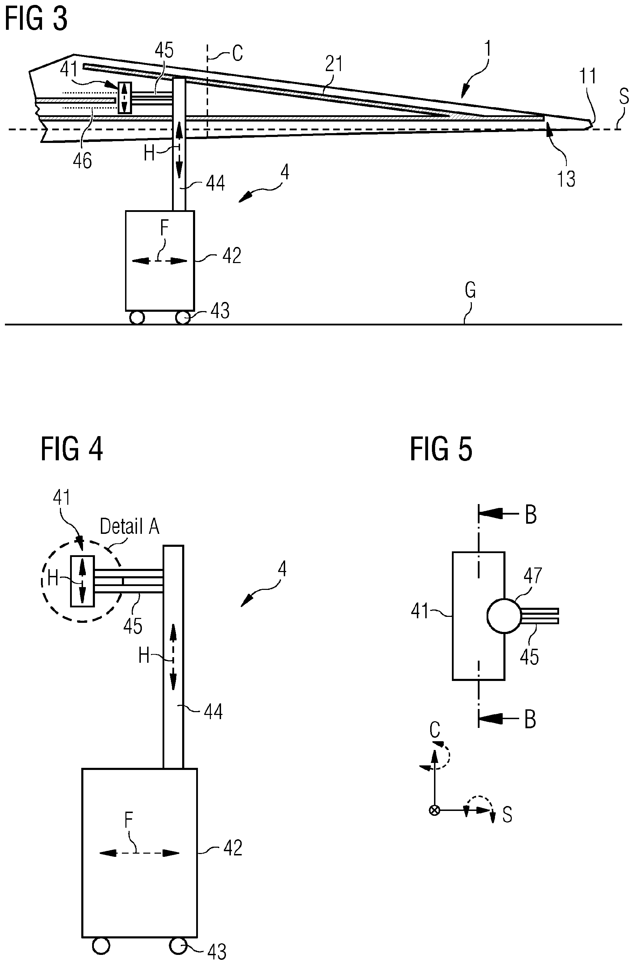

**Fig. 3** shows a schematic side view of the raw wind turbine blade 1 of Fig. 1 during execution of the method according to the invention with a grinding apparatus 4 located sideways adjacent to the raw wind turbine blade 1. The filled grooves 21 are still in an unground state.

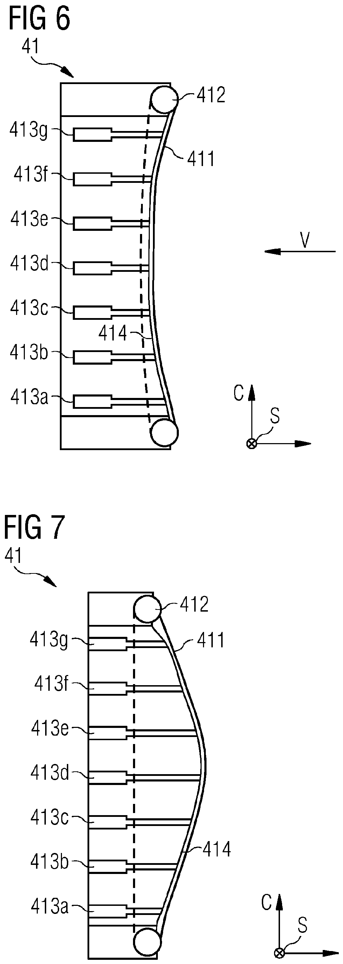

The grinding apparatus 4 comprises a tool head 41 with at least one grinding means 411,415 (see Fig. 6 - Fig. 9), wherein the tool head 41 is moveable at least along the spanwise direction S of the blade 1. The tool head 41 is fixed to an apparatus base 42 having a drive system and wheels 43 that allow the apparatus base 42 to move along the spanwise direction S. As the apparatus base 42 moves, the tool head 41 moves with it. The tool head 41 is mounted at the apparatus base 42 through a support structure 44 and a tool head connector 45. One end of the tool head connector 45 is arranged at the support structure 44 and another end of the tool head connector 45 at the tool head 41. The support structure 44 may in particular extend essentially vertical.

The tool head 41 is further moveable in a height direction H, wherein the required degree of freedom of movement can be provided by means of the support structure 44 and/or by means of the tool head 41. It is in particular possible that the support structure 44 comprises a linear drive system adapted to move the tool head connector 45 in height.

A shape of the tool head 41 is adaptable at least with respect to a plane running perpendicular to the spanwise direction S so that the tool head 41 can form a cross-sectional shape representing a negative of a cross-sectional shape of the airfoil geometry of the wind turbine blade 1 at a given spanwise position.

In order to initiate the grinding process, the grinding means 411,415 of the tool head 41 is placed on a section of a filled groove 21. Before or after, the shape of the tool head 41 is adapted so that it corresponds with a shape of a cross-section of an airfoil geometry of the wind turbine blade 1 at the specific spanwise position. Then, the tool head 41 is moved by movement of the apparatus base 42 in the spanwise direction S so that the filler material 3 is continuously grinded from the filled groove 21.

As the tool head 41 is moved along the spanwise direction S a height position H of the tool head is continuously adjusted to correspond with a local height position of the filled groove 21.

As the blade 1 has variable cross-sections along the spanwise direction S and additionally might be twisted, the shape of the tool head 41 can be continuously adapted as the tool head 41 is moved along the spanwise direction S to always correspond with a local shape of a cross-section of the airfoil geometry of the blade 1.

In the shown embodiment the grinding is done at the pressure side 13 of the blade 1. In other embodiments - which are not shown in the Figures - the grinding using the grinding apparatus 4 might also be done at a suction side 14 of the blade 1.

Further, the grinding apparatus 4, in particular the tool head 41 of the grinding apparatus 4, comprises at least one optical projection means, in particular a dot and/or line projection means, that projects a dot or line of light 46 onto an outer surface of the raw wind turbine blade 1 in at least one region laterally neighboring the filled groove 21.

The projected dot or line of light 46 on the surface of the raw wind turbine blade 1 gives an indication of the area that is to be grinded and allows to precisely reshape the tool head 41 so that the grinding is substantially limited to the filled groove 21 and a laminate structure of the raw wind turbine blade 1 outside of the filled groove 21 is not damaged by grinding.

In **Fig. 4** the grinding apparatus is shown in more detail, whereas **Fig. 5** shows Detail A of Fig. 4. The tool head 41 can be mounted to the tool head connector 45 by means of a tool head joint 47 having at least one rotational degree of freedom of movement along the spanwise direction S. Additionally or alternatively the joint 47 or a different joint might have a rotational degree of freedom of movement along the chordwise direction C and/or along an axis running perpendicularly to both the spanwise direction S and the chordwise direction C. As the tool head 41 is moved along the spanwise direction S the rotational position of the tool head 41 can be continuously adapted at the joint 47 to ensure the grinding means 411,415 of the tool head 41 contacts the filled groove 21 at a given spanwise position at a predefined grinding angle.

In **Fig. 6** a first embodiment of the tool head 41 is shown as a cross-section in the plane B-B of Fig. 5, i.e. the sectional plane runs parallel to the chordwise direction C and perpendicular to the spanwise direction S. The tool head 41 comprises a grinding belt 411 that is mounted on pulleys 412, at least one of the pulleys being a driven pulley 412. The pulleys 412 rotate substantially along the spanwise direction S so that the grinding belt 411 moves in the chordwise direction C respectively along a circumferential direction of the blade 1 in an intended state of use of the grinding apparatus 4. Beneath the grinding belt 411 the tool head 41 comprises a deformable support 414 that is coupled to multiple actuators 413a-g that are variable in length. By individually controlling the length of the actuators 413a-g a shape of the deformable support 414 can be adapted, e.g. to form a concave shape as it is shown in Fig. 6 or to form a convex shape as it is shown in **Fig. 7****.** The convexity and/or concavity in Fig. 6 and Fig. 7 are shown in an exaggerated way to illustrate the operation of the tool head 41, although the convexity and/or concavity may be less pronounced in practice.

This adaptability of the shape of the tool head 41 allows for an efficient and high quality grinding of any cross-sectional shape along the spanwise direction of a wind turbine blade.

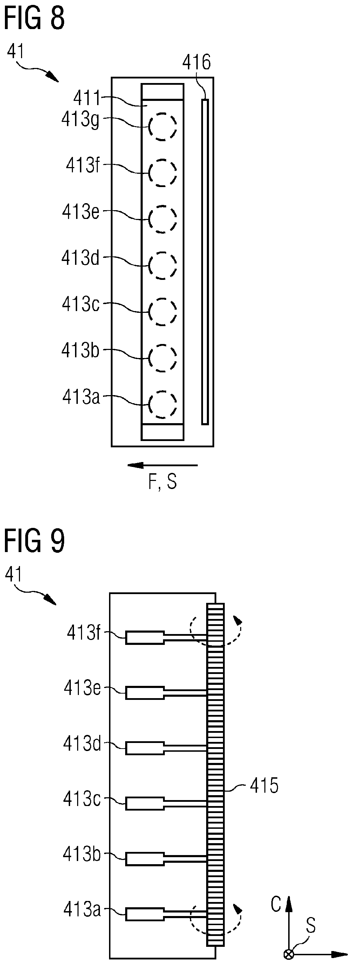

**Fig. 8** shows a bottom view of the tool head 41 of Fig. 6 and Fig. 7 from a view direction v indicated in Fig. 6. Next to the grinding belt 411 in the spanwise direction S the tool head 41 comprises a suction nozzle 416 that can be coupled to a vacuum source when the grinding apparatus 4 is used.

**Fig. 9** shows a different embodiment of a tool head 41 that does not comprise a grinding belt but rotatable grinding heads 415. Other than the grinding belt the rotatable grinding heads 415 are rotatable along the chordwise direction C. The tool head 41 of the second embodiment equally comprises multiple actuators 413a-f that are variable in length in order to adapt the shape of the tool head 41.

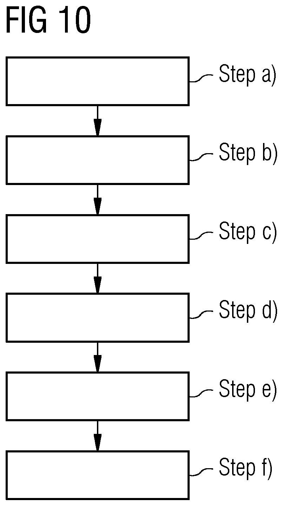

Lastly, **Fig. 10** shows a flow chart of an embodiment of the method according to the invention.

The method comprises the following steps:
a) Manufacturing a raw wind turbine blade 1 or raw wind turbine blade section by lamination of one or multiple layers of fiber material, wherein the raw wind turbine blade 1 or raw wind turbine blade section comprises at least one groove 2 running at least with a directional component along a spanwise direction S;
b) Filling the at least one groove 2 with a hardenable filler material 3 that is subsequently hardened so that at least one filled groove 21 is provided;
c) Providing a grinding apparatus 4
   - comprising a tool head 41 with at least one grinding means 411, 415,
   - wherein the tool head 41 is moveable at least along the spanwise direction S,
   - and wherein a shape of the tool head 41 is adaptable at least with respect to a plane running perpendicular to the
   spanwise direction S;
d) Placing the grinding means 411,415 of the tool head 41 on a section of the filled groove 21;
e) Adapting the shape of the tool head 41 so that it corresponds with a shape of a cross-section of an airfoil geometry of the wind turbine blade or wind turbine blade section at a given spanwise position;
f) Moving the tool head 41 in the spanwise direction S, thereby continuously grinding the filler material 3 with the grinding means 411, 415 from the filled groove 21.

Although the present invention has been described in accordance with preferred embodiments, it is obvious for the person skilled in the art that modifications are possible in all embodiments.

Independent of the grammatical term usage, individuals with male, female or other gender identities are included within the term.

## Claims

1. Method for manufacturing a wind turbine blade or wind turbine blade section, comprising the steps
a) Manufacturing a raw wind turbine blade (1) or raw wind turbine blade section by lamination of one or multiple layers of fiber material, wherein the raw wind turbine blade (1) or raw wind turbine blade section comprises at least one groove (2) running at least with a directional component along a spanwise direction (S);
b) Filling the at least one groove (2) with a hardenable filler material (3) that is subsequently hardened so that at least one filled groove (21) is provided;
c) Providing a grinding apparatus (4)
- comprising a tool head (41) with at least one grinding means (411, 415),
- wherein the tool head (41) is moveable at least along the
spanwise direction (S),
- and wherein a shape of the tool head (41) is adaptable at
least with respect to a plane running perpendicular to the
spanwise direction (S);
d) Placing the grinding means (411,415) of the tool head (41) on a section of the filled groove (21);
e) Adapting the shape of the tool head (41) so that it corresponds with a shape of a cross-section of an airfoil geometry of the wind turbine blade or wind turbine blade section at a given spanwise position;
f) Moving the tool head (41) in the spanwise direction (S), thereby continuously grinding the filler material (3) with the grinding means (411,415).

2. Method according to claim 1, wherein the shape of the tool head (41) of the grinding apparatus (4) is continuously adapted in step f) as the tool head (41) is moved along the spanwise direction (S) to correspond with a local shape of a cross-section of the airfoil geometry of the wind turbine blade or wind turbine blade section.

3. Method according to claim 1 or 2, wherein the tool head (41) of the grinding apparatus (4) is moveable in a height direction (H) with respect to an intended state of use of the grinding apparatus (4) and wherein step f) comprises continuously adjusting a height position (H) of the tool head (41) as the tool head (41) is moved along the spanwise direction (S) to correspond with a local height position of the filled groove (21).

4. Method according to any of the claims 1 to 3, wherein the raw wind turbine blade (1) or raw wind turbine blade section is fixed by a fixture in a predefined height over the ground (G) so that the spanwise direction (S) runs essentially parallel to the ground (G), wherein in particular a suction side (14) and/or pressure side (13) of the raw wind turbine blade (1) or raw wind turbine blade section are located sidewards.

5. Method according to claim 4, wherein steps d) to f) are executed at a pressure side (13) and/or a suction side (14) of the raw wind turbine blade (1) or raw wind turbine blade section
and/or wherein the grinding apparatus (4) is located sideways adjacent to the raw wind turbine blade (1) or raw wind turbine blade section.

6. Method according to any of the preceding claims, wherein the tool head (41) of the grinding apparatus (4) is rotatable at least along one axis, wherein the at least one axis in particular runs parallel to the spanwise direction (S) of the raw wind turbine blade (1) or raw wind turbine blade section, and wherein in particular step f) includes continuously adapting a rotational position of the tool head (41) as the tool head (41) is moved along the spanwise direction (S) to ensure the grinding means (411,415) of the tool head (41) contacts the filled groove (21) at a given spanwise position at a predefined grinding angle.

7. Method according to any of the preceding claims, wherein the tool head (41) of the grinding apparatus (4) comprises multiple actuators (413a-g) arranged spaced apart along a circumferential direction of the raw wind turbine blade (1) or raw wind turbine blade section, wherein the actuators (413a-g) are each adapted to locally apply a force on the grinding means (411,415), and wherein the actuators (413a-g) are used in step d) and/or f) to adapt the shape of the tool head (41).

8. Method according to claim 7, wherein the grinding apparatus (4) comprises at least one processing means adapted to at least individually control the actuators (413a-g) and/or the height position (H) of the tool head (41).

9. Method according to claim 8, wherein the grinding apparatus (4), in particular the tool head (41) of the grinding apparatus (4), comprises
- at least one optical projection means, in particular a dot and/or line projection means, adapted to project a dot or line of light (46) onto an outer surface of the raw wind turbine blade (1) or raw wind turbine blade section in at least one region laterally neighboring the filled groove (21),
- and at least one optical sensor adapted to detect said projected dot or line of light (46) on the surface of the raw wind turbine blade (1) or raw wind turbine blade section,
- wherein said optical sensor is operably coupled to the processing means,
wherein in step d) and/or f) data from the optical sensor is processed by the processing means to adapt the shape of the tool head (41) by individually controlling the multiple actuators (413a-g) to ensure that substantially only the filled groove (21) is grinded and/or to adjust a height position (H) of the tool head (41).

10. Method according to any of the preceding claims,
wherein the grinding apparatus (4), in particular the tool head (41) of the grinding apparatus (4), comprises at least one camera and/or at least one distance sensor and/or at least one gloss meter,
wherein the at least one camera and/or at least one distance sensor and/or at least one gloss meter are operably coupled to the processing means and wherein in step d) and/or f) data from the at least one camera and/or at least one distance sensor and/or at least one gloss meter is processed by the processing means to adapt the shape of the tool head (41) by individually controlling the multiple actuators (413a-g) to ensure that substantially only the filled groove (21) is grinded and/or to adjust a height position (H) of the tool head (41).

11. Method according to any of the preceding claims, wherein the grinding apparatus (4) comprises a processing means operably coupled with at least one data source, wherein the data source comprises data describing a three-dimensional shape of an outer surface of the wind turbine blade or wind turbine blade section, wherein in step f) the tool head (41) is moved along the spanwise direction (S) under continuous adaption of the height position (H) of the tool head (41) and/or under continuous adaption of the shape of the tool head (41) based on said data.

12. Grinding apparatus (4) for grinding a grinding area of a raw wind turbine blade (1) or raw wind turbine blade section, the grinding area having an extension along a spanwise direction (S) of the raw wind turbine blade (1) or raw wind turbine blade section and a convex or concave curved cross-section, in particular for use in a method according to any of the preceding claims,
the grinding apparatus comprising:
- a tool head (41) with at least one grinding means (411, 415),
- wherein the tool head (41) is moveable at least along the
spanwise direction (S) of the raw wind turbine blade (1) or
raw wind turbine blade section,
- and wherein a shape of the tool head (41) is adaptable at
least with respect to a plane running perpendicular to a spanwise direction (S) of the raw wind turbine blade (1)
or
raw wind turbine blade section.

13. Grinding apparatus (4) according to claim 12,
- wherein the tool head (41) is mounted to an apparatus base (42) that is moveable on the ground (G), wherein in particular the apparatus base (42) comprises a drive system and wheels (43) that allow movement of the apparatus base (42) in the spanwise direction (S) of the raw wind turbine blade (1) or raw wind turbine blade section or
- wherein the tool head (41) is mounted at a crane or gantry system above the raw wind turbine blade (1) or raw wind turbine blade section in an intended state of use of the grinding apparatus (4), wherein the crane or gantry system allows movement of the tool head (41) in the spanwise direction (S) of the raw wind turbine blade (1) or raw wind turbine blade section.

14. Grinding apparatus (4) according to claim 12 or 13, wherein the grinding means (411, 415) is rotatable around the spanwise direction (S) or chordwise direction (C) of the raw wind turbine blade (1) or raw wind turbine blade section in an intended state of use of the grinding apparatus (4), wherein in particular the grinding means (411, 415) comprises at least one belt sander (411) or rotatable grinding head (415) .

15. Grinding apparatus (4) according to any of the claims 12 to 14, wherein the tool head (41) comprises at least one suction nozzle (416) connectable to a vacuum source for dust extraction from the grinding means (411, 415).
